# EUROPEAN PATENT SPECIFICATION

(11) **EP 3 036 426 B1**
(45) Date of publication and mention of the grant of the patent: **02.08.2017**
(21) Application number: 14758155.7
(22) Date of filing: 15.08.2014
(51) Int. Cl.: F02M 43/00, F02D 19/06, F02D 41/00

(54) **FUEL INJECTION CIRCUIT AND METHOD FOR OPERATING A MULTI-FUEL PISTON ENGINE**
KRAFTSTOFFEINSPRITZKREISLAUF UND VERFAHREN ZUM BETRIEB EINES MEHRKRAFTSTOFFKOLBENMOTORS
CIRCUIT D'INJECTION DE CARBURANT ET PROCÉDÉ POUR LE FONCTIONNEMENT D'UN MOTEUR À PISTONS À CARBURANTS MULTIPLES

(30) Priority: 20.08.2013 FI 20135844
(43) Date of publication of application: 29.06.2016
(73) Proprietor: Wärtsilä Finland Oy, 65380 Vaasa (FI)
(72) Inventor: MALMIMÄKI, Tapio, FI-65100 Vaasa (FI)
(74) Representative: Berggren Oy, Helsinki & Oulu
(86) International application number: PCT/FI2014/050629
(87) International publication number: WO 2015/025078

(56) References cited:
- EP-A1- 2 009 277
- WO-A1-2012/177128
- DE-A1- 3 909 750
- DE-A1-102009 000 894
- US-A1- 2012 048 242

## Description

### Technical field of the invention

The present invention relates to a fuel injection circuit in accordance with the preamble of claim 1. The invention also concerns a method for operating a multi-fuel piston engine, as defined in the preamble of the other independent claim.

### Background of the invention

An effective solution for reducing emissions and lowering operating costs of large internal combustion engines both in ships and at power plants are so called dual or tri-fuel engines, which can be operated both on gaseous and liquid fuel. These multi-fuel engines offer the flexibility to choose the most suitable fuel according to the availability and price of different fuels and/or emission limits that are in force in a certain place or at a certain time. For instance, a ship engine can be operated on gaseous fuel in areas where strict emission limits are applied and on heavy fuel oil elsewhere. In sophisticated engines the switch from gaseous fuel to distillate grade liquid fuel, such as light fuel oil (LFO) can be made automatically and instantly at full load. However, direct switch from gaseous fuel to residual fuel, such as heavy fuel oil (HFO), is not possible. An intermediate phase with LFO operation is required between the gas and HFO operation, and the transition from LFO to HFO may take as long as half an hour. This is because the viscosity of HFO is high and the temperature of the fuel needs to be increased before using HFO.

### Summary of the invention

An object of the present invention is to provide for a piston engine an improved fuel injection circuit, which aims to solve the above mentioned problems. The characterizing features of the fuel injection circuit according to the invention are given in the characterizing part of claim 1. Another object of the invention is to provide an improved method for operating a multi-fuel piston engine, which engine can be operated in a gas mode using gaseous fuel and in a liquid fuel mode using liquid fuel, and comprises for each cylinder of the engine at least one fuel injection pump and at least one fuel injector for injecting liquid fuel into the cylinders. The characterizing features of the operating method are given in the characterizing part of the other independent claim.

The fuel injection circuit according to the invention comprises for each cylinder of the engine at least one fuel injection pump and at least one fuel injector which is connected to the fuel injection pump. Each fuel injector is connected to a fuel circulation duct and the fuel injection circuit is provided with a fuel circulation valve for each cylinder of the engine for selectively preventing and allowing fuel circulation through the fuel injectors and the fuel circulation duct.

In the method according to the invention, when the engine is operated in the gas mode, the liquid fuel is circulated through the fuel injectors.

With the engine and the method according to the invention, the fuel injectors can be kept at an appropriate temperature even when the engine is operated using gaseous fuel. The operating mode can thus be quickly changed from the gas mode to liquid fuel mode even when residual fuel is used. This helps to optimize the operating costs of the engine. Separate valves for all the cylinders of the engine allow individual control of the fuel circulation in each fuel injector of the engine.

The fuel circulation duct can be provided with an adjustable throttle for restricting the amount of the fuel flow through the fuel circulation duct. The fuel temperature in the fuel circulation duct can be monitored for ensuring that the temperature is high enough for allowing switch to the use of residual fuel.

The fuel circulation valve can be, for instance, a solenoid valve. The fuel circulation duct can be connected to a return line of the fuel injection pumps.

### Brief description of the drawings

Embodiments of the invention are described below in more detail with reference to the accompanying drawings, in which
Fig. 1 shows a simplified illustration of a fuel injection system for liquid fuel in a piston engine, and
Fig. 2 shows a fuel system for gaseous fuel.

### Description of embodiments of the invention

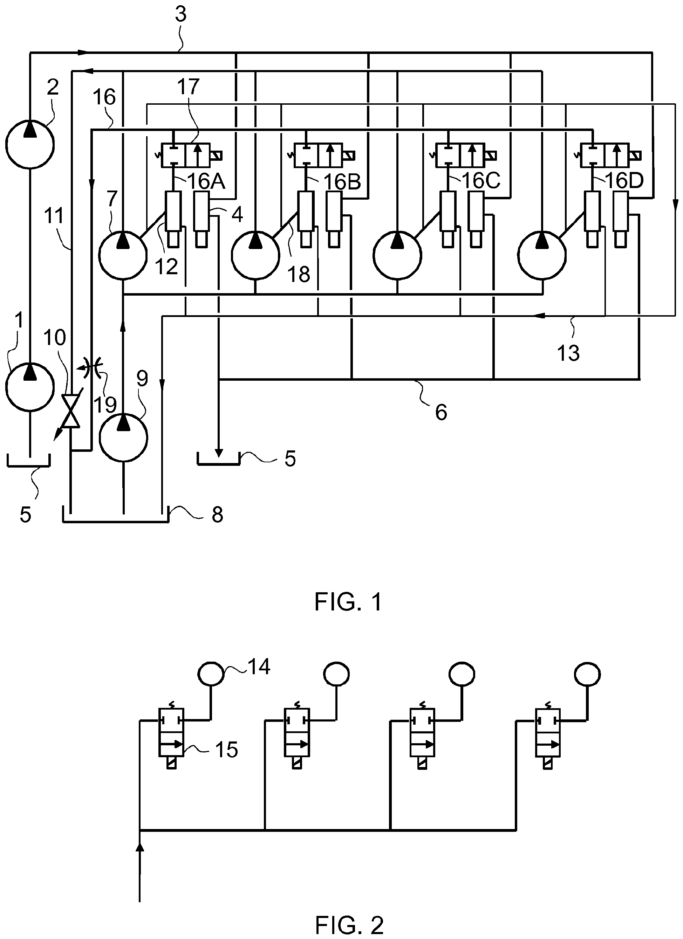

In figure 1 is shown schematically a fuel injection system for liquid fuel in a multi-fuel piston engine. Figure 2 shows for the same engine a fuel system for gaseous fuel. The engine is a large internal combustion engine, such as a main or an auxiliary engine of a ship or an engine that is used at a power plant for producing electricity. The engine can comprise any reasonable number of cylinders, which can be arranged, for instance, in line or in a V-configuration. The engine can be selectively operated on gaseous fuel or liquid fuel. The liquid fuel can be, for instance, heavy fuel oil (HFO), light fuel oil (LFO) or marine diesel fuel (MDF). The gaseous fuel can be, for instance, natural gas or biogas. The gas is introduced into the intake duct of the engine. In the gas mode, a small amount of liquid pilot fuel is used for igniting the gaseous fuel. The amount of the pilot fuel is less than one percent of the full load fuel consumption. The pilot fuel should be of distillate fuel grade, such as LFO or MDF. The so called lean burn principle is used in the gas mode. The mixture of the air and gas in the combustion chamber contains thus more air than is needed for complete combustion. Lean combustion reduces peak temperatures and therefore NOx emissions. Efficiency is increased and higher output is reached while avoiding knocking. Combustion of the lean air-fuel mixture is initiated by injecting a small amount of the liquid pilot fuel into the cylinder. The pilot fuel is ignited in a conventional diesel process, providing a high-energy ignition source for the main charge. To obtain the best efficiency and lowest emissions, every cylinder is individually controlled to ensure operation at the correct air-fuel ratio and with the correct amount and timing of pilot fuel injection.

In figure 2 is shown schematically a fuel system for the gaseous fuel. Each cylinder 14 of the engine is provided with a gas admission valve 15, through which the gaseous fuel can be introduced into the intake duct of the cylinder 14. The gas admission valve 15 is controlled electrically. The gas admission valve 15 of each cylinder 14 can be controlled independently of the intake valve. The gas is mixed with the intake air upstream from the intake valve in the cylinder head. Instead of the intake duct, the gas could also be introduced into a precombustion chamber.

The fuel injection system of the engine comprises a first fuel circuit for main liquid fuel and a second fuel circuit for liquid pilot fuel. The main liquid fuel, which is used when the engine is operated solely on liquid fuel, is injected into the cylinders 14 of the engine by means of conventional fuel injection pumps 7. The pilot fuel is injected into the cylinders 14 by a common rail system.

The common rail system for the pilot fuel injection comprises a pilot fuel supply pump 1, which delivers pilot fuel from a pilot fuel tank 5 to a high-pressure pump 2 at a relatively low pressure. The pressure of the pilot fuel is increased by the high-pressure pump 2, from which the pilot fuel is introduced into a fuel rail 3, which works as a pressure accumulator. From the fuel rail 3, the pressurized fuel is fed to pilot fuel injectors 4. Each cylinder 14 of the engine is provided with at least one pilot fuel injector 4, which is part of the common rail circuit. The common rail system could also be provided with several high-pressure pumps 2 and fuel rails 3. For instance, in a V-engine each cylinder bank could be provided with an own high-pressure pump 2 and a fuel rail 3. It is also possible that there is one high-pressure pump 2 and a fuel rail 3 for two cylinders 14 or a few cylinders 14. It is even possible to provide each cylinder 14 with an own pressure accumulator, in which case the fuel rail 3 can be replaced by a fuel supply pipe delivering the fuel from the high-pressure pump 2 to the pilot fuel injectors 4. The pilot fuel injectors 4 are individually controlled. The control can be, for instance, electrical. Each pilot fuel injector 4 is connected to a return line 6, through which the excess pilot fuel is returned to the pilot fuel tank 5.

The pilot fuel injection through the common rail system is used even when the engine is operated on liquid fuel. The pilot fuel injection is needed for controlling the temperature of the pilot fuel injector 4 and for preventing clogging of the pilot fuel injector 4. The engine can also be run for a short time in a backup mode without the pilot fuel injection, but a longer operation in the backup mode can lead to clogging of the pilot fuel injectors 4.

When the engine is operated on liquid fuel, the fuel is introduced into the cylinders 14 of the engine by means of conventional fuel injection pumps 7. In the liquid fuel mode, the engine can be operated both on distillate grade fuels and residual fuels. Each cylinder 14 of the engine is provided with an own fuel injection pump 7. The fuel is delivered from the fuel tank 8 to the fuel injection pumps 7 by means of a fuel supply pump 9. From each fuel injection pump 7, the fuel is supplied to a fuel injector 12 of the respective cylinder 14 through a feed pipe 18. The pilot fuel injector 4 and the main fuel injector 12 can be integrated into a common injector unit. The fuel that is not supplied to the fuel injectors 12 is collected into the return line 11 of the fuel injection pumps 7, which conducts the fuel back into the fuel tank 8. The return line 11 is provided with a pressure control valve 10, which maintains the pressure in the return line 11 at the desired level. Clean leaking fuel from the fuel injectors 12 and the feed pipes 18 is collected into a leak line 13. The clean leakage occurs due to the clearances of the fuel injection pumps 7 and the fuel injectors 12 during normal operation of the engine. The leak line 13 is provided with means for monitoring the amount of the leaking fuel and an alarm is triggered if the amount exceeds a certain predetermined value.

A problem with multi-fuel engines has been that an instant switch-over from operation on gaseous fuel to operation on residual liquid fuel has not been possible, but operation on distillate grade fuel, such as LFO, has been needed between the operation on residual fuel, such as HFO, and gaseous fuel. For enabling quicker or instant change from the gas mode to operation on residual fuel, the fuel circuit for the liquid fuel is provided with a fuel circulation duct 16, which allows circulation of the residual fuel through the fuel injectors 12. The fuel circulation duct 16 is connected to the fuel injectors 12. The fuel circulation duct 16 is provided with a branch 16A, 16B, 16C, 16D for each fuel injector 12. The fuel injection circuit is further provided with a fuel circulation valve 17 for each cylinder 14 of the engine for selectively allowing and preventing flow through the fuel circulation duct 16. The fuel circulation valves 17 are solenoid valves. The fuel circulation duct 16 is connected to the return line 11 of the fuel injection pumps 7 downstream of the pressure control valve 10. The fuel circulation duct 16 is separate from the leak line 13. The fuel circulation duct 16 could be integrated with the leak line 13, but in that case the leakage from the fuel injection pumps 7 and the fuel injectors 12 could not be monitored when the fuel circulation is in use. The fuel circulation duct 16 is provided with an adjustable throttle 19. With the throttle 19, the amount of the flow through the fuel circulation duct 16 can be restricted when needed. The fuel circulation duct 16 can also be provided with a temperature sensor.

When the engine is operated in the liquid fuel mode, the fuel circulation valves 17 are kept closed. The fuel injection works thus normally and part of the fuel that is pressurized by each fuel injection pump 7 flows through the feed pipe 18 to the fuel injector 12. The pressure of the fuel opens the fuel injector 12 and the fuel is injected into the cylinder 14 of the engine. When the engine is operated in the gas mode, the fuel circulation valves 17 can be opened. The fuel injection pumps 7 are also kept working. Because of the open fuel circulation valves 17, fuel can flow from each fuel injection pump 7 to the upper part of the respective fuel injector 12. Since the fuel circulation duct 16 is connected to the return line 11 of the fuel injection pumps 11 downstream of the pressure control valve 10, the pressure in the fuel injectors 12 does not rise significantly. The fuel injectors 12 are thus not opened, but the fuel can flow from the fuel injectors 12 through the branches 16A, 16B, 16C, 16D of the fuel circulation duct 16 to the return line 11 and further into the fuel tank 8. The flowing fuel keeps the fuel injection pumps 7 and the fuel injectors 12 in a correct operating temperature and enables quick transition from gaseous fuel to residual fuel. The fuel temperature in the fuel circulation duct can be monitored for ensuring that the temperature is high enough for allowing switch to the use of residual fuel.

It will be appreciated by a person skilled in the art that the invention is not limited to the embodiments described above, but may vary within the scope of the appended claims. For instance, the invention is also applicable to multi-fuel engines without pilot fuel injection.

## Claims

1. A fuel injection circuit for a multi-fuel piston engine, which engine can be selectively operated on gaseous fuel or liquid fuel, the fuel injection circuit comprising for each cylinder (14) of the engine at least one fuel injection pump (7) and at least one fuel injector (12), which is connected to the fuel injection pump (7), **characterized in that** the fuel circuit for the liquid fuel is provided with a fuel circulation duct (16) for allowing circulation of residual fuel through the fuel injectors (12) and that each fuel injector (12) is connected to the fuel circulation duct (16) and the fuel injection circuit is provided with a fuel circulation valve (17) for each cylinder (14) of the engine for selectively preventing and allowing fuel circulation through the fuel injectors (12) and the fuel circulation duct (16).

2. A fuel injection circuit according to claim 1, **characterized in that** the fuel circulation valve (17) is a solenoid valve.

3. A fuel injection circuit according to claim 1 or 2, **characterized in that** the fuel circulation duct (16) is connected to a return line (11) of the fuel injection pumps (7).

4. A fuel injection circuit according to any of claims 1-3, **characterized in that** the fuel circulation duct (16) is provided with an adjustable throttle (19).

5. A fuel injection circuit according to any of the preceding claims, **characterized in that** the fuel circulation duct (16) is provided with a temperature sensor.

6. A method for operating a multi-fuel piston engine, which engine can be operated in a gas mode using gaseous fuel and a small amount of liquid pilot fuel for igniting the gaseous fuel and in a liquid fuel mode using liquid fuel, the engine comprising a fuel injection circuit comprising for each cylinder (14) of the engine at least one fuel injection pump (7) and at least one fuel injector (12), which is connected to the fuel injection pump (7) for injecting liquid fuel into the cylinders (14), **characterized in that** when the engine is operated in the gas mode, the liquid fuel is circulated through the fuel injectors (12), which are connected to a fuel circulation duct (16) provided in the fuel circuit of the multi-fuel engine for allowing circulation of residual fuel through the fuel injectors (12).

7. A method according to claim 6, **characterized in that** a separate fuel circulation valve (17) is used for controlling the fuel circulation through the fuel injector (12) of each cylinder (14) of the engine.

8. A method according to claim 6 or 7, **characterized in that** the circulated fuel is conducted into a return line (11) of the fuel injection pumps (7).

9. A method according to any of claims 6-8, **characterized in that** the temperature of the fuel in the fuel circulation duct (16) is monitored.

## Patentansprüche

1. Kraftstoffeinspritzkreislauf für einen Mehrkraftstoffkolbenmotor, dessen Motor wahlweise mit gasförmigem Kraftstoff oder flüssigem Kraftstoff betrieben werden kann, wobei der Kraftstoffeinspritzkreislauf für jeden Zylinder (14) des Motors mindestens eine Kraftstoffeinspritzpumpe (7) und mindestens eine Kraftstoffeinspritzdüse (12) umfasst, welche mit der Kraftstoffeinspritzpumpe (7) verbunden ist, **dadurch gekennzeichnet, dass** der Kraftstoffkreislauf für den flüssigen Kraftstoff mit einem Kraftstoffzirkulationskanal (16) zum Ermöglichen einer Zirkulation von Restkraftstoff durch die Kraftstoffeinspritzdüsen (12) bereitgestellt ist, und dass jede Kraftstoffeinspritzdüse (12) mit dem Kraftstoffzirkulationskanal (16) verbunden ist und der Kraftstoffeinspritzkreislauf mit einem Kraftstoffumlaufventil (17) für jeden Zylinder (14) des Motors zum selektiven Verhindern und Ermöglichen von Kraftstoffzirkulation durch die Kraftstoffeinspritzdüsen (12) und den Kraftstoffzirkulationskanal (16) bereitgestellt ist.

2. Kraftstoffeinspritzkreislauf nach Anspruch 1, **dadurch gekennzeichnet, dass** das Kraftstoffumlaufventil (17) ein Magnetventil ist.

3. Kraftstoffeinspritzkreislauf nach Anspruch 1 oder 2, **dadurch gekennzeichnet, dass** der Kraftstoffzirkulationskanal (16) mit einer Rücklaufleitung (11) der Kraftstoffeinspritzpumpen (7) verbunden ist.

4. Kraftstoffeinspritzkreislauf nach einem der Ansprüche 1 - 3, **dadurch gekennzeichnet, dass** der Kraftstoffzirkulationskanal (16) mit einer einstellbaren Drossel (19) bereitgestellt ist.

5. Kraftstoffeinspritzkreislauf nach einem der vorhergehenden Ansprüche, **dadurch gekennzeichnet, dass** der Kraftstoffzirkulationskanal (16) mit einem Temperatursensor bereitgestellt ist.

6. Verfahren zum Betrieb eines Mehrkraftstoffkolbenmotors, dessen Motor in einem Gasbetrieb gasförmigen Kraftstoff und eine geringe Menge flüssigen Primärkraftstoff zum Zünden des gasförmigen Kraftstoffs und in einem Flüssigkraftstoffbetrieb flüssigen Kraftstoff nutzt, wobei der Motor einen Kraftstoffeinspritzkreislauf umfasst, der für jeden Zylinder (14) des Motors mindestens eine Kraftstoffeinspritzpumpe (7) und mindestens eine Kraftstoffeinspritzdüse (12) umfasst, welche mit der Kraftstoffeinspritzpumpe (7) zum Einspritzen von flüssigem Kraftstoff in die Zylinder (14) verbunden ist, **dadurch gekennzeichnet, dass** wenn der Motor im Gasbetrieb betrieben wird, der flüssige Kraftstoff durch die Kraftstoffeinspritzdüsen (12) verteilt wird, welche mit einem Kraftstoffzirkulationskanal (16) verbunden sind, der im Kraftstoffkreislauf des Mehrkraftstoffmotors zum Ermöglichen einer Zirkulation von Restkraftstoff durch die Kraftstoffeinspritzdüsen (12) bereitgestellt ist.

7. Verfahren nach Anspruch 6, **dadurch gekennzeichnet, dass** ein separates Kraftstoffumlaufventil (17) zum Steuern der Kraftstoffzirkulation durch die Kraftstoffeinspritzdüse (12) von jedem Zylinder (14) des Motors genutzt wird.

8. Verfahren nach Anspruch 6 oder 7, **dadurch gekennzeichnet, dass** der zirkulierte Kraftstoff in eine Rücklaufleitung (11) der Kraftstoffeinspritzpumpen (7) geleitet wird.

9. Verfahren nach einem der Ansprüche 6 - 8, **dadurch gekennzeichnet, dass** die Temperatur des Kraftstoffs im Kraftstoffzirkulationskanal (16) überwacht wird.

## Revendications

1. Circuit d'injection de carburant pour un moteur à piston multi-carburants, lequel moteur peut fonctionner de façon sélective avec du carburant gazeux ou du carburant liquide, le circuit d'injection de carburant comprenant pour chaque cylindre (14) du moteur au moins une pompe d'injection de carburant (7) et au moins un injecteur de carburant (12) qui est relié à la pompe d'injection de carburant (7), **caractérisé en ce que** le circuit de carburant pour le carburant liquide est doté d'un tuyau de circulation de carburant (16) pour permettre la circulation de carburant résiduel à travers les injecteurs de carburant (12) et que chaque injecteur de carburant (12) est relié au tuyau de circulation de carburant (16), et le circuit d'injection de carburant est doté d'une soupape de circulation de carburant (17) pour chaque cylindre (14) du moteur pour éviter et permettre de façon sélective la circulation de carburant à travers les injecteurs de carburant (12) et le tuyau de circulation de carburant (16).

2. Circuit d'injection de carburant selon la revendication 1, **caractérisé en ce que** la soupape de circulation de carburant (17) est une électrovanne.

3. Circuit d'injection de carburant selon la revendication 1 ou 2, **caractérisé en ce que** le tuyau de circulation de carburant (16) est relié à une ligne de retour (11) des pompes d'injection de carburant (7).

4. Circuit d'injection de carburant selon l'une quelconque des revendications 1 - 3, **caractérisé en ce que** le tuyau de circulation de carburant (16) est doté d'un papillon ajustable (19).

5. Circuit d'injection de carburant selon l'une quelconque des revendications précédentes, **caractérisé en ce que** le tuyau de circulation de carburant (16) est doté d'un capteur de température.

6. Procédé destiné au fonctionnement d'un moteur à piston multi-carburants, lequel moteur peut fonctionner dans un mode gaz en utilisant du carburant gazeux et une petite quantité de carburant pilote liquide pour allumer le carburant gazeux et dans un mode de carburant liquide utilisant du carburant liquide, le moteur comprenant un circuit d'injection de carburant comprenant pour chaque cylindre (14) du moteur au moins une pompe d'injection de carburant (7) et au moins un injecteur de carburant (12) qui est relié à la pompe d'injection de carburant (7) pour injecter du carburant liquide dans les cylindres (14), **caractérisé en ce que** lorsque le moteur fonctionne en mode gaz, le carburant liquide circule à travers les injecteurs de carburant (12) qui sont reliés à un tuyau de circulation de carburant (16) prévu dans le circuit de carburant du moteur multi-carburants pour permettre la circulation de carburant résiduel à travers les injecteurs de carburant (12).

7. Procédé selon la revendication 6, **caractérisé en ce qu'**une soupape de circulation de carburant séparée (17) est utilisée pour commander la circulation du carburant à travers l'injecteur de carburant (12) de chaque cylindre (14) du moteur.

8. Procédé selon la revendication 6 ou 7, **caractérisé en ce que** le carburant circulé est dirigé dans une ligne de retour (11) des pompes d'injection de carburant (7).

9. Procédé selon l'une quelconque des revendications 6 - 8, **caractérisé en ce que** la température du carburant dans le tuyau de circulation de carburant (16) est surveillée.
